# EUROPÄISCHE PATENTSCHRIFT

(11) **EP 1 002 693 B1**
(45) Veröffentlichungstag und Bekanntmachung des Hinweises auf die Patenterteilung: **07.09.2005**
(21) Anmeldenummer: 99120963.6
(22) Anmeldetag: 03.11.1999
(51) Int. Cl.: B60N 2/48

(54) **Motorischer Kopfstützen-Verstellantrieb für Fahrzeugsitze**
Powered actuator for headrests of vehicle seats
Actionneur motorisé pour appui-tête de sièges de véhicules

(30) Priorität: 20.11.1998 DE 19853624
(43) Veröffentlichungstag der Anmeldung: 24.05.2000
(73) Patentinhaber: Volkswagen Aktiengesellschaft, 38436 Wolfsburg (DE)
(72) Erfinder: Albrecht, Björn, Dipl.-Ing., 38527 Meine (DE); Stahl, Arne, 38518 Gifhorn (DE); Schweissgut, Jakob, Dipl.-Ing., 38542 Leiferde (DE)

(56) Entgegenhaltungen:
- DE-A- 4 407 519
- DE-A- 19 644 021
- US-A- 4 923 250
- US-A- 5 222 784
- US-A- 5 288 129

## Beschreibung

Die Erfindung betrifft eine Kopfstützenanordnung gemäß dem Oberbegriff des Patentanspruchs 1.

Bekanntlich kann eine in ein Kraftfahrzeug eingebaute Kopfstütze nur dann ihre volle Wirkung entfalten, wenn ihre Höhenlage an die Größe des jeweiligen Fahrzeuginsassen auf dem Sitz, dem die Kopfstütze zugeordnet ist, angepaßt ist. Demgemäß ist es erforderlich, bei einem Wechsel des Fahrzeuginsassen, insbesondere bei Fahrzeuginsassen sehr unterschiedlicher Sitzgrößen, eine Höhenverstellung der Kopfstütze vorzunehmen. Auf der anderen Seite muß die Kopfstütze in jeder eingestellten Höhenlage relativ fest arretiert sein, so daß die definierte Höhenverstellung nicht selten Schwierigkeiten bereitet. Im Idealfall ist die Kopfstützenanordnung so getroffen und ausgelegt, daß die auf dem betreffenden Sitz sitzende Person mit ihren beiden Händen die Kopfstütze in die ideale Höhenlage bewegen kann. Insbesondere ältere Personen haben hierbei aber Schwierigkeiten, weil sie einerseits Hände und Arme in relativ ungewohnte Positionen bewegen müssen und andererseits eine relativ große Verstellkraft aufzubringen ist, da, wie gesagt, die Arretierung der Kopfstütze in ihren verschiedenen Höhenlagen relativ robust ausgelegt sein muß. In vielen Fällen leichter ist eine Verstellung aus einer Insassenposition hinter dem betreffenden Sitz, jedoch kann dann der auf dem Sitz Sitzende nicht selber die Höheneinstellung der Kopfstütze vornehmen, sofern er nicht vor dem Niedersetzen eine Position hinter dem Sitz einnimmt, von der aus er relativ bequem die Höheneinstellung der Kopfstütze vornehmen kann. Im Hinblick auf diese Schwierigkeiten unterbleibt häufig eine Einstellung der idealen Höhenlage der Kopfstütze, so daß in vielen Fällen die Kopfstütze zu niedrig positioniert ist und bei einem Crash Anlaß zu einem Nackentrauma gibt, bzw. sie zu hoch positioniert ist, so daß bei einem Crash der Kopf zwischen Kopfstütze und obere Lehnenkante gerät.

Aus diesem Grunde sind schon elektromotorische Verstellantriebe für Kopfstützen bekannt, deren Antriebsmotor in der Rückenlehne angeordnet ist. Dort sind aber aus verschiedenen Gründen - Unterbringung einer Lordosenstütze, knickbare Ausbildung der Rückenlehne - die Platzverhältnisse sehr beengt, so daß sich in vielen Fällen ein motorischer Verstellantrieb für die Kopfstütze dort nicht unterbringen läßt. Es sei auch daran erinnert, daß ein motorischer Verstellantrieb dieser Art in der Regel eine relativ "dicke" Ausführung der Rückenlehne erfordert, was sich wiederum nachteilig auf die Bein- oder Kniefreiheit insbesondere hinter diesem Sitz sitzender Fahrzeuginsassen auswirkt.

US 5,222,784, welches den nächstliegenden Stand der Technik darstellt, offenbart eine Kopfstütze mit einem eingebauten elektromotorischen Verstellantrieb.

Der Erfindung liegt die Aufgabe zugrunde, eine gattungsgemäße Kopfstützenanordnung zu schaffen, deren Bestandteile an Stellen untergebracht sind, an denen sie die Ausbildung der Rückenlehne und die Platzverhältnisse in dieser nicht beeinträchtigen.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Infolge Anordnung der krafterzeugenden Bestandteile der Verstellvorrichtung, nämlich des Elektromotors, der gegebenenfalls ein Getriebe enthält, in der Kopfstütze werden durch die Erfindung die Platzverhältnisse in der Rückenlehne nicht berührt. In der Kopfstütze dagegen, wo sich also der Elektromotor befindet, steht genügend Platz zur Verfügung, da der den Kern der Kopfstütze bildende starre Rahmen die Platzverhältnisse dort weniger bestimmt als die vorgegebene äußere Größe der Kopfstütze, so daß auch in diesem Rahmen hinlänglich Platz zur Unterbringung des Elektromotors besteht.

Günstig hinsichtlich der Platzverhältnisse wirkt sich auch das weitere Merkmal der Erfindung, nämlich die Ausnutzung zumindest einer der ohnehin erforderlichen Haltestützen für die Kopfstütze zur Höhenverstellung, aus. Diese Haltestange stützt sich auf einer Gewindespindel ab, die zwar in der Rückenlehne angeordnet ist, aber dort nur wenig Platz in Fortsetzung der Haltestange verlaufend benötigt. Bildet man zumindest diese Haltestange rohrförmig aus, was ohnehin bei den meisten Konstruktionen der Fall ist, so kann man ein Kraft- oder Momentenübertragungsglied, daß sich zwischen der Abtriebswelle des Elektromotors und der Gewindespindel erstreckt, durch diese rohrförmige Haltestange hindurchführen, so daß auch hierfür kein zusätzlicher Platzbedarf entsteht und dieses im Hinblick auf eine Verschwenkbarkeit der Kopfstütze bevorzugt als biegsame Welle ausgeführte Kraft- oder Momentenübertragungsglied durch die ohnehin erforderliche Haltestange geschützt liegt.

Nun erhebt sich die Frage der Zuführung elektrischer Antriebs- und Steuerenergie zu dem Elektromotor, der, wie gesagt, in der Kopfstütze selbst angeordnet ist. Eine feste Verlegung von Kabeln ist nicht möglich, da die Kopfstütze nachträglich, d.h. nach Aufbringen eines Lehnenbezugs auf die Rückenlehne, in die lehnenseitigen Führungen mit den Haltestangen eingesetzt wird. Diese Schwierigkeiten vermeidet die in den Ansprüchen 7, 8 und 9 angegebene Ausführung der Erfindung, die ohne Beeinträchtigung der Montierbarkeit und Demontierbarkeit der Kopfstütze an der Sitzrückenlehne in keinen zusätzlichen Platz in der Rückenlehne erfordernder Weise zumindest eine der ohnehin vorhandenden Haltestangen so - insbesondere zweiteilig - ausführt, daß sie einen Bestandteil einer elektrischen Kupplung bildet.

Ein Ausführungsbeispiel der Erfindung wird infolgenden anhand der Zeichnung erläutert. Die Figuren zeigen:
- Figur 1: in Vorderansicht die bezüglich der Fahrtrichtung des Fahrzeugs linken Bereiche von Rückenlehne und Kopfstütze mit einer erfindungsgemäß ausgebildeten Verstellvorrichtung,
- Figur 2: eine Seitenansicht und
- Figur 3: wiederum eine Vorderansicht, jedoch diesmal des bezüglich der Fahrtrichtung rechten Bereichs von Kopfstütze und Rückenlehne.

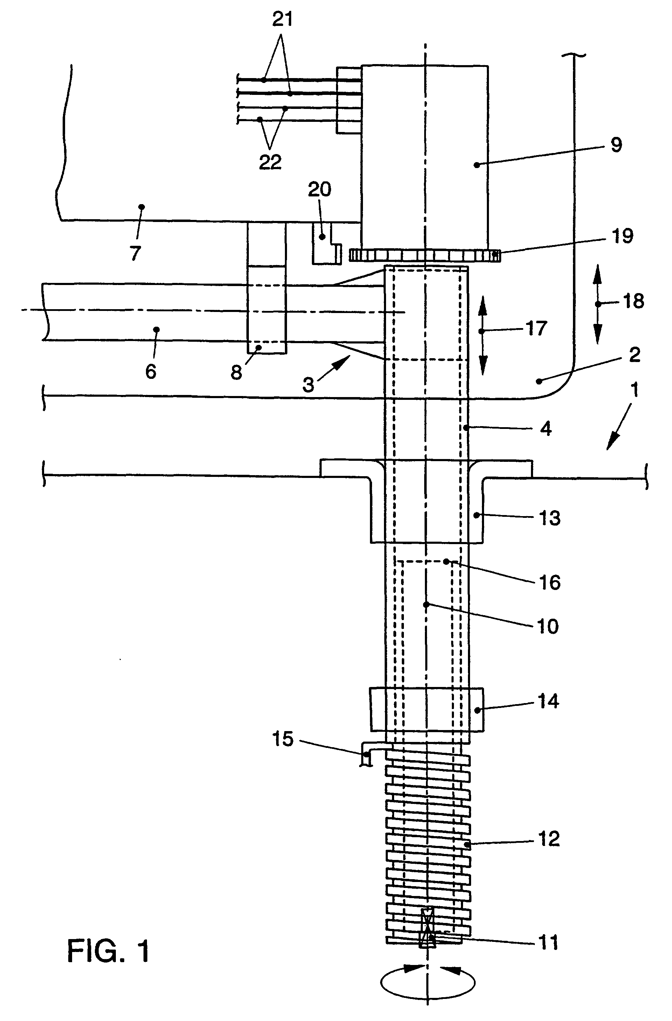

In den verschiedenen Figuren sind die Rückenlehne allgemein mit 1 und die Kopfstütze allgemein mit 2 bezeichnet. Die Konstruktion von Rückenlehne und Kopfstütze interessiert in diesem Zusammenhang im einzelnen nicht, da, was als Vorteil anzusehen ist, die Erfindung diesbezüglich keine Voraussetzungen erfordert. Zur Halterung der Kopfstütze 2 an oder in der Rückenlehne 1 dient der allgemein mit 3 bezeichnete Haltebügel, der drei starr verbundene Bestandteile enthält, nämlich die linke Haltestange 4, die rechte Haltestange 5 und die beide starr verbindende Querachse 6. Diese drei Bestandteile sind in diesem Ausführungsbeispiel als Rohre ausgebildet. Wie nur in Figur 1 dargestellt, ist der innere Rahmen 7 der Kopfstütze 2 mittels als Schellen ausgebildeter Schwenklager 8 auf der Querachse 6 gelagert, so daß die Möglichkeit einer Verschwenkung des Rahmens 7 und damit der gesamten Kopfstütze 2 um die Querachse 6 gegeben ist. Die Durchführung dieser Schwenkbewegung wird später noch beschrieben.

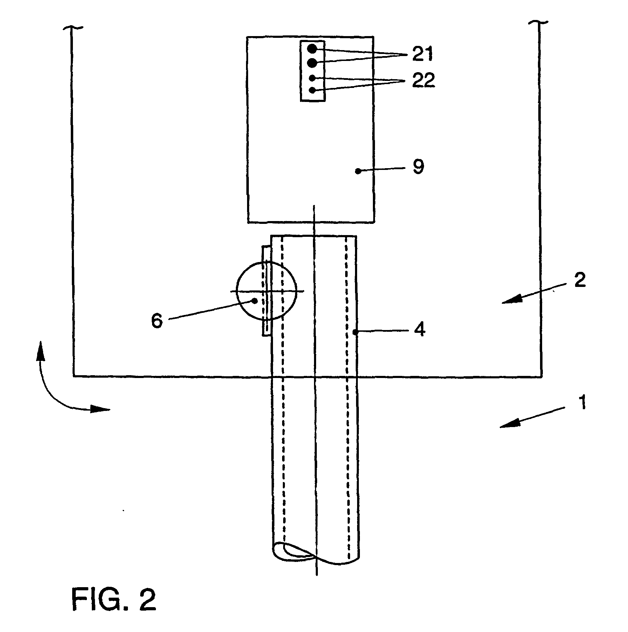

Betrachtet man nun zunächst weiter die Figuren 1 und 2, so ist in der Kopfstütze 2 der Elektromotor 9 angeordnet, der an dem Kopfstützenrahmen 7 mit bekannten Mitteln festgelegt ist. Die Ausgangswelle des Elektromotors 9 ist mit der biegsamen Welle 10, die in sich drehfest ist und damit Momente möglichst winkelgenau überträgt, verbunden, die an ihrem unteren Ende bei 11 drehfest mit der wiederum hohl ausgeführten Gewindespindel 12 verbunden ist. Während die Betätigungsstange 4 höhenverschiebbar in den lehnenseitigen Führungen 13 und 14 gehalten ist, stützt sich die Gewindespindel 12 an der lehnenseitig starr gehaltenen Spindelmutter 15 ab, so daß Drehbewegungen der Gewindespindel 12, die ihre Ursache letztlich in Drehungen des zwei Drehrichtungen aufweisenden Elektromotors 9 haben, zu einer Höhenverstellung der Gewindespindel 12 führen. Diese stützt bei 16 die Haltestange 4 ab, so daß bei Drehbewegungen der Spindel Höhenverstellungen der Haltestange 4 im Sinne des Doppelpfeils 17 und damit Höhenverstellungen der Kopfstütze 2 im Sinne des Doppelpfeils 18 erfolgen. Diese Höhenverstellung oder Höheneinstellung kann ein auf dem betreffenden Sitz sitzender Fahrzeug-insasse leicht durch Betätigen eines Schalters vornehmen.

In Figur 1 ist ferner bei 19 ein auf der Abtriebswelle des Elektromotors 9 drehfestes Zahnrad gezeichnet. Ihm ist der am Kopfstützenrahmen 7 feste Mitnehmer 20 zugeordnet, der beispielsweise mittels eines kleinen Handgriffs zwischen seiner dargestellten ausgerückten Stellung und einer in Figur 1 nach rechts verschobenen Stellung bewegbar ist, in der er in Zähne des Zahnrads 19 eingreift. Betätigungen des Elektromotors 9 haben demgemäß bei eingerücktem Mitnehmer 20 eine begrenzte Verschwenkung des Rahmens 7 und damit der gesamten Kopfstütze 2 um die Querachse 6 zur Folge, so daß auch eine Einstellung der Schräge der Vorderfläche der Kopfstütze 2 bzw. des Kopfabstands der Kopfstütze möglich ist. Zwar ist mit dieser Neigungseinstellung auch eine Veränderung der Höhenstellung der Kopfstütze 2 verbunden, da jede Drehung des Elektromotors 9 eine Drehung der Spindel 12 zur Folge hat, jedoch läßt sich durch unterschiedliche Übersetzungsverhältnisse bei Höhenverstellung und Neigungsverstellung sicherstellen, daß eine bereits bemerkbare Neigungsverstellung nicht mit einer spürbaren Höhenverstellung gekoppelt ist. Die Steigung der Gewindespindel 12 wird man ohnehin so wählen, daß eine Selbstsperrung sichergestellt ist.

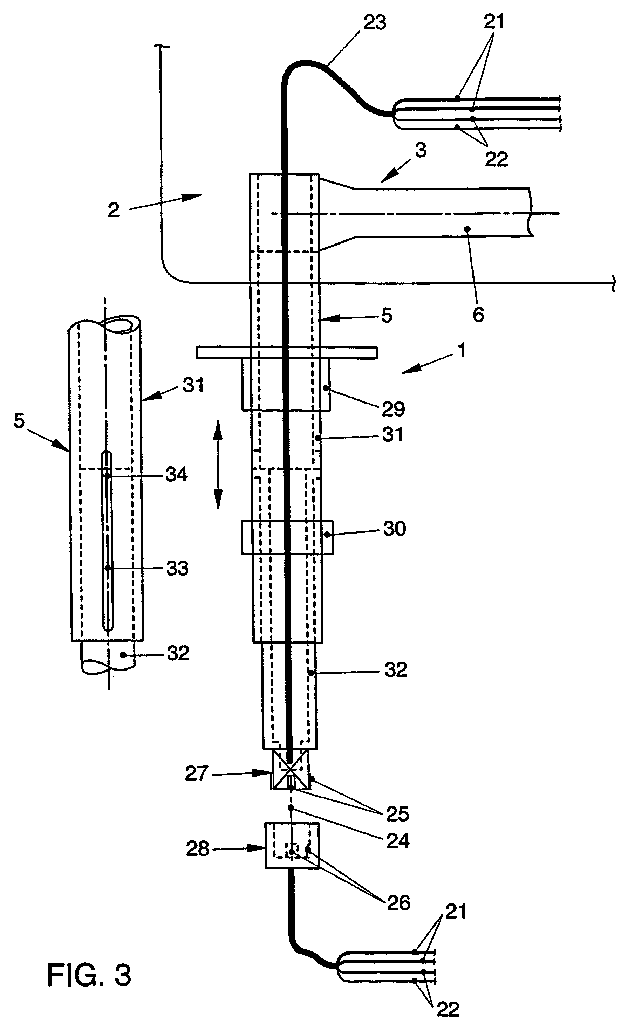

Dem Elektromotor 9 sind Energieversorgungsleitungen 21 und Steuerleitungen 22 zugeordnet. Diese sind - siehe Figur 3 - zu dem Kabel 23 zusammengefaßt, das bei 24 unterbrochen und dort zu haltestangenseitigen Kontakten 25 und rückenlehnenfesten Gegenkontakten 26 geführt ist. Die Kontakte 25 und 26 sind Bestandteile einer Clipkupplung, deren mechanische Teile bei 27 und 28 angedeutet sind. Damit ist sichergestellt, daß nach Einführen der Haltestange 5 in die lehnenseitigen Führungen 29 und 30 und nach Verschieben der Kopfstütze nach unten, bis die Kupplungsteile 27 und 28 eine weitere Bewegung unterbinden, eine elektrische Kontaktgabe zwischen den Kontakten 25 einerseits und 26 andererseits erfolgt.

Die Haltestange 5 ist in zwei Stangenteile 31 und 32 unterteilt, die bereichsweise teleskopieren, wie dies auch aus der Einzeldarstellung im linken Teil der Figur 3 ersichtlich ist. Dort ist die Haltestange 5 um 90° um ihre Längsachse verschwenkt gezeichnet. Man erkennt, daß der obere Haltestangenteil 31 das Langloch 33 aufweist, in das der Querstift 34 an dem unteren Haltestangenteil 32 hineinragt. Die Länge des Langlochs 33 entspricht dem vorgesehenen Höhenverstellbereich der Kopfstütze 2, so daß der Querstift 34 am unteren Ende des Höhenverstellbereichs an dem unteren Ende des Langlochs 33 anschlägt, während der Stift 34 bei in ihrer höchsten Position befindlicher Kopfstütze 2 zur Anlage an dem oberen Endbereich des Langlochs 33 gelangt. In diesem Zusammenhang sei daran erinnert, daß der untere Haltestangenteil 32 sich in Richtung nach unten an dem lehnenfesten Kupplungsteil 28 abstützt, während seine Bewegungen in Richtung nach oben bis zum Ausüben einer erhöhten Zugkraft durch die Clipsverbindung durch die Kupplungsteile 27 und 28 begrenzt wird. Erst beim Aufbringen einer nach oben wirkenden Kraft, die größer als die Höhenverstellkräfte ist, wird die Kupplung 27, 28 gelöst, so daß dann die Nackenstütze 2 von der Rückenlehne 1 abgenommen werden kann.

In dem figürlich wiedergegebenen Ausführungsbeispiel der Erfindung weist der Halterahmen 3 also zwei Haltestangen 4 und 5 auf, von denen die Haltestange 4 aktiv zur Höhenverstellung der Kopfstütze 2 herangezogen wird, während die andere Haltestange 5 im Hinblick auf die Zufuhr elektrischer Energie und von Steuerungsenergie konstruiert ist. Grundsätzlich wäre auch eine andere Auslegung des Haltebügels 3 denkbar, beispielsweise mit drei parallelen Haltestangen.

In jedem Fall ist mit der Erfindung eine gattungsgemäße Kopfstützenanordnung geschaffen, die unter Einsatz an sich bewährter Bauteile auch bei beengten Platzverhältnissen in der Sitzrückenlehne einsetzbar ist.

## Patentansprüche

1. Kopfstützenanordnung für eine Sitzrückenlehne mit einer Kopfstütze, von dieser nach unten weisenden, in rückenlehnenseitigen Führungen höhenbeweglich geführten Kopfstützen-Haltestangen sowie einem motorischen Antrieb zur Kopfstützen-Höhenverstellung, mit einem in der Kopfstütze (2) angeordneten Elektromotor (9), **dadurch gekennzeichnet, daß** der Antrieb zumindest eine mit dem Elektromotor antriebsmäßig gekoppelte, eine der Haltestangen (4) abstützende Spindel (12) enthält, die in einer in der Rückenlehne befestigbaren Spindelmutter (15) läuft.

2. Kopfstützenanordnung nach Anspruch 1, **dadurch gekennzeichnet, daß** cer Elektromotor (9) oberhalb der Haltestange (4) mit einer nach unten weisenden Abtriebswelle angeordnet ist.

3. Kopfstützenanordnung nach Anspruch 1 oder 2, **dadurch gekennzeichnet, daß** die Kopplung ein drehsteifes Übertragungsglied (10) enthält, das von dem Elektromotor (9) abgeht, die rohrförmige Haltestange (4) durchsetzt und drehfest mit der Gewindespindel (12) verbunden (11) ist.

4. Kopfstützenanordnung nach Anspruch 3, **gekennzeichnet durch** ein Übertragungsglied nach Art einer biegsamen Welle (10).

5. Kopfstützenanordnung nach Anspruch 4, **dadurch gekennzeichnet, daß** die Kopfstütze (2) auf einer die Haltestangen (4, 5) in der Kopfstütze (2) verbindenden Querachse (6) zusammen mit dem Elektromotor (9) schwenkbar gelagert ist.

6. Kopfstützenanordnung nach Anspruch 5, **dadurch gekennzeichnet, daß** der Elektromotor (9) in Antriebsverbindung mit einem senkrecht zur Schwenkrichtung der Kopfstütze (2) stehenden Zahnrad (19) steht und dieser ein Mitnehmer (20) zugeordnet ist, der nur zur Schwenkung in Eingriff mit dem Zahnrad (19) bringbar ist.

7. Kopfstützenanordnung nach einem der Ansprüche 1 bis 6, **dadurch gekennzeichnet, daß** elektrische Energie- und/oder Steuerleitungen (21, 22) längs oder in einer Haltestange (5) zu Kontakten (25) geführt sind, denen feste Gegenkontakte (26) in der Rückenlehne (1) zugeordnet sind.

8. Kopfstützenanordnung nach Anspruch 7, **dadurch gekennzeichnet, daß** die Haltestange (5) zwei teilweise teleskopierende Stangenteile (31, 32) enthält, von denen der der Kopfstütze (2) abgewandte eine Stangenteil (32) die Kontakte (25) trägt und mit seinem freien Ende in Clipsverbindung (27, 28) mit den Gegenkontakten (26) steht, während beide Stangenteile (31, 32) in Mitnahmeverbindung (33, 34) in Längsrichtung der Haltestange (5) nur dann stehen, wenn die Kopfstütze (2) in eine Höhenstellung bewegt wird, die über der maximal einstellbaren Höhe liegt.

9. Kopfstützenanordnung nach Anspruch 8, **gekennzeichnet durch** eine Langloch-Stift-Mitnahmeverbindung (33, 34).

## Claims

1. Head restraint arrangement for a seat backrest with a head restraint, with retaining bars for the head restraint which protrude downwardly from the latter and are guided in a vertically moving manner in guides on the backrest side, and with a motor drive for adjusting the height of the head restraint having an electric motor (9) arranged in the head restraint (2), **characterized in that** the drive comprises at least one spindle (12) which is drive-coupled with the electric motor, supports one of the retaining bars (4) and runs in a spindle lap (15) which can be fastened in the backrest.

2. Head restraint arrangement according to Claim 1, **characterized in that** the electric motor (9) is arranged above the retaining bar (4) of a downwardly protruding output shaft.

3. Head restraint arrangement according to Claim 1 or 2, **characterized in that** the coupling comprises a torsionally rigid transmission member (10) which emanates from the electric motor (9), passes through the tubular retaining rod (4) and is connected (11) in a rotationally fixed manner to the threaded spindle (12).

4. Head restraint arrangement according to Claim 3, **characterized by** a transmission member in the form of a flexible shaft (10).

5. Head restraint arrangement according to Claim 4, **characterized in that** the head restraint (2) is mounted so that it is able to pivot, together with the electric motor (9), on a transverse axle (6) connecting the retaining bars (4, 5) in the head restraint (2).

6. Head restraint arrangement according to Claim 5, **characterized in that** the electric motor (9) is in drive connection with a gearwheel (19) which is situated perpendicularly to the pivoting direction of the head restraint (2) and this gearwheel is assigned a driver (20) which can be brought into engagement with the gearwheel (19) for pivoting only.

7. Head restraint arrangement according to one of Claims 1 to 6, **characterized in that** electrical power and/or control lines (21, 22) are guided, along or in a retaining rod (5), to contacts (25) which are assigned fixed mating contacts (26) in the backrest (1).

8. Head restraint arrangement according to Claim 7, **characterized in that** the retaining rod (5) comprises two partially telescoping rod parts (31, 32), of which one rod part (32) remote from the head restraint (2) bears the contacts (25) and has its free end in clip-in connection (27, 28) with the mating contacts (26), whereas the two rod parts (31, 32) are in driving connection (33, 34) in the longitudinal direction of the retaining rod (5) only when the head restraint (2) is moved into a vertical position which is above the maximum adjustable height.

9. Head restraint arrangement according to Claim 8, **characterized by** a slot/pin driving connection (33, 34).

## Revendications

1. Agencement d'appui-tête pour un dossier de siège comprenant un appui-tête, des barres de fixation d'appui-tête guidées de manière déplaçable en hauteur dans des coulisses du côté du dossier, tournées vers le bas depuis l'appui-tête, ainsi qu'un entraînement motorisé pour le réglage en hauteur de l'appui-tête, avec un moteur électrique (9) disposé dans l'appui-tête, **caractérisé en ce que** l'entraînement contient au moins une broche (12) accouplée pour l'entraînement avec le moteur électrique, supportant l'une des barres de fixation (4), et s'étendant dans un écrou de broche (15) pouvant être fixé dans le dossier.

2. Agencement d'appui-tête selon la revendication 1, **caractérisé en ce que** le moteur électrique (9) est disposé au-dessus de la barre de fixation (4) avec un arbre de sortie tourné vers le bas.

3. Agencement d'appui-tête selon la revendication 1 ou 2, **caractérisé en ce que** l'accouplement contient un organe de transmission rigide en rotation (10), qui part du moteur électrique (9), traverse la barre de fixation de forme tubulaire (4) et qui est connecté (11) fixement en rotation à la broche filetée (12).

4. Agencement d'appui-tête selon la revendication 3, **caractérisé par** un organe de transmission du type arbre flexible (10).

5. Agencement d'appui-tête selon la revendication 4, **caractérisé en ce que** l'appui-tête (2) est monté à pivotement sur un axe transversal (6) reliant les barres de fixation (4, 5) dans l'appui-tête (2), conjointement avec le moteur électrique (9).

6. Agencement d'appui-tête selon la revendication 5, **caractérisé en ce que** le moteur électrique (9) est en liaison d'entraînement avec une roue dentée (19) disposée perpendiculairement à la direction de pivotement de l'appui-tête (2), et un dispositif d'entraînement (20) est associé à celui-ci et peut être amené en engagement avec la roue dentée (19) uniquement en vue du pivotement.

7. Agencement d'appui-tête selon l'une quelconque des revendications 1 à 6, **caractérisé en ce que** des lignes de commande et/ou d'alimentation électriques (21, 22) sont guidées le long de ou dans une barre de fixation (5) vers des contacts (25) auxquels sont associés des contacts fixes conjugués (26) dans le dossier (1).

8. Agencement d'appui-tête selon la revendication 7, **caractérisé en ce que** la barre de fixation (5) présente deux parties de barre se télescopant partiellement (31, 32), dont la partie de barre (32) opposée à l'appui-tête (2) porte les contacts (25) et est en liaison par enclipsage (27, 28) par son extrémité libre avec les contacts conjugués (26), tandis que les deux parties de barre (31, 32) ne sont en liaison d'entraînement conjoint (33, 34) dans la direction longitudinale de la barre de fixation (5) que lorsque l'appui-tête (2) est déplacé dans une position en hauteur qui est au-dessus de la hauteur maximale ajustable.

9. Agencement d'appui-tête selon la revendication 8, **caractérisé par** une liaison d'entraînement conjoint (33, 34) à trou oblong et tige.
